# EUROPEAN PATENT APPLICATION

(11) **EP 4 495 336 A1**
(43) Date of publication of application: **22.01.2025**
(21) Application number: 24188925.2
(22) Date of filing: 16.07.2024
(51) Int. Cl.: E02F 9/08, B60K 11/04, B66F 9/065

(54) **A WORKING MACHINE**

(30) Priority: 21.07.2023 GB 202311207
(71) Applicant: J.C. Bamford Excavators Limited, Uttoxeter Staffordshire ST14 5JP (GB)
(72) Inventor: Newberry, Steve, Uttoxeter, ST14 5JP (GB); Williams, Edward, Uttoxeter, ST14 5JP (GB)
(74) Representative: Sugden, Mark William

(57) **Abstract**

A working machine includes a front and rear defined by the principal direction of travel, and a cab side and a lifting arm side on either side of a longitudinal axis of the working machine. The working machine is provided with a ground engaging structure, an undercarriage supported on the ground engaging structure and a superstructure rotatably mounted to the undercarriage. A drive arrangement has a prime mover on the undercarriage that is operable to provide motive power to the ground engaging structure. An operator cab mounted to the superstructure in a position offset from the longitudinal axis of the working machine so as to be positioned proximate to the cab side, and a lifting arm extending generally fore-aft for performing work functions and pivotable about a first generally horizontal axis. The working machine includes a cooling arrangement configured to cool the prime mover, said cooling arrangement comprising a radiator panel, wherein the radiator panel is arranged outboard of the prime mover with respect to the longitudinal axis of the working machine.

## Description

### FIELD

The present teachings relate to a working machine. In particular, the present teachings relate to a working machine with a rotatable superstructure.

### BACKGROUND

Working machines with rotatable superstructures are generally well known. Examples of such machines include rotary telehandlers and wheeled excavators, by way of example. Working machines of this type are commonly used in construction, agriculture, or forestry, among other sectors.

Rotary telehandlers (often referred to as roto-telehandlers or just rotos) include a pivoting telescopically extending lifting arm which allows items to be moved between different locations at varying heights with relative ease and flexibility. These machines are configured to slew about a main vertical axis such that the main body which carries the working arm and operator station is able to rotate with respect to a ground engaging structure and an undercarriage. Such machines are generally larger than conventional working machines, in particular conventional rigid telehandlers, and can handler larger load at extended heights, e.g. a rated capacity in excess of 5000kg and heights above 20m.

Compact working machines (such as compact rotary telehandlers and compact wheeled excavators) exist in the market, however even compact working machines have limited manoeuvrability. The spatial restrictions on sites, for example construction sites for constructing modular buildings, are becoming increasingly more confined. The size of compact working machines and their limited manoeuvrability makes them unsuitable for or inefficient at working on sites, for example construction sites, with spatial restrictions. However, safety standards for working machines set specific requirements for machine parameters such as minimum and maximum step height, number of access locations and safe load capacity. This means that the size of the working machine is limited by the requirements of various safety standards. Such standards include EN1459-2:2015 governing many safety requirements of slewing variable-reach trucks.

The present teachings seek to overcome or at least mitigate one or more problems associated with the prior art.

### SUMMARY

A first aspect of the teachings provides a working machine comprising a front and rear defined by the principal direction of travel, and a cab side and a lifting arm side on either side of a longitudinal axis of the working machine, the working machine comprising: a ground engaging structure comprising front and rear wheels; a body comprising an undercarriage supported on the ground engaging structure and a superstructure mounted to the undercarriage; a drive arrangement comprising a prime mover mounted to the undercarriage and operable to provide motive power to the ground engaging structure; an operator cab mounted to the superstructure in a position offset from the longitudinal axis of the working machine so as to be positioned proximate to the cab side; a lifting arm extending generally fore-aft for performing work functions and pivotable about a first generally horizontal axis; and a cooling arrangement configured to cool the prime mover, said cooling arrangement comprising a radiator panel, wherein the radiator panel is arranged outboard of the prime mover with respect to the longitudinal axis of the working machine.

Advantageously, the provision of the radiator panel outward of the engine enables the undercarriage (and therefore the overall working machine) to have a reduced size, thereby improving the compactness of the working machine whilst meeting the requirements of EN1459-2 and ISO2867. A working machine with reduced compactness may have improved manoeuvrability and versatility, enabling use on construction sites with spatial restrictions. Additionally, a more compact working machine may require lower material costs, less fuel to operate and/or lower maintenance costs, thereby improving the cost effectiveness of the working machine.

The superstructure may be rotatably mounted to the undercarriage.

A longitudinal axis of the prime mover may extend along an axis substantially parallel to the central longitudinal axis of the working machine. Advantageously, arranging the prime mover along the axis parallel to the longitudinal axis of the working machine helps reduce a width of the prime mover in a direction transverse the longitudinal axis, and helps to enable the outboard positioning of the radiator panel with respect to the prime mover.

The undercarriage may comprise a structural frame extending parallel to the longitudinal axis and the prime mover may be mounted outboard of the structural frame. Advantageously, this allows the engine to be accessible for maintenance.

The prime mover may be at least partially interposed between the radiator panel and the undercarriage. Advantageously, interposing the prime mover at least partially between the radiator panel and the undercarriage enables the undercarriage to have a reduced size without increasing the width of the working machine, thereby improving the compactness of the working machine whilst meeting the requirements of EN1459-2 and ISO2867.

A majority of the prime mover may be interposed between the radiator panel and the undercarriage. Advantageously, interposing the majority of the prime mover between the radiator panel and the undercarriage enables the undercarriage to have a reduced size fore-aft without increasing the width of the working machine, thereby improving the compactness of the working machine whilst meeting the requirements of EN1459-2 and ISO2867.

The radiator panel may be interposed between front and rear wheels. Advantageously, the position of the radiator panel between the front and rear wheels reduces the size of the undercarriage without increasing the overall width of the working machine.

The radiator panel may not extend beyond the front and rear wheels. Advantageously, this arrangement reduces the size of the undercarriage without increasing the overall width of the working machine.

The radiator panel may form part of a cooling pack. The cooling pack may comprise a cooling fan mounted to the radiator panel. Advantageously, the cooling fan draws air towards the radiator panel for cooling.

The undercarriage may define a length extending along the longitudinal axis of the working machine, and the length may be up to 5000mm. The length may be up to 4500mm. Advantageously, lengths in these ranges are less than traditional working machines of this type, thereby increasing compactness and manoeuvrability of the working machine.

The working machine may define a height extending along an axis perpendicular to the longitudinal axis of the working machine, and wherein the height may be up to 3000mm. The height may be up to 2800mm. Advantageously, heights in these ranges are less than traditional working machines of this type, thereby increasing compactness and manoeuvrability of the working machine.

The working machine may define a width extending along an axis perpendicular to the longitudinal axis of the working machine, and the width may be up to 2500mm. The width may be up to 2400mm. Advantageously, widths in these ranges are less than traditional working machines of this type, thereby increasing compactness and manoeuvrability of the working machine.

A ratio of a height of the operator cab to a height of the undercarriage may be greater than 1:0.7. The ratio may be greater than 1:0.63. Advantageously, ratios in these ranges have been found to reduce a distance between a ground surface and a lowermost surface of the operator cab, particularly when standard cab sizes are used with the working machine. Operator cab size is restricted by EN1459-2 and ISO2867, therefore it is difficult to reduce the height of the operator cab whilst complying with these regulations. Ratios within these ranges are greater than the ratios of traditional machines of this type, therefore the height of the undercarriage (and therefore the distance between the operator cab and the ground surface) must be reduced to achieve these ratios for a standard cab size.

A ratio of a height of the operator cab to a height of the working machine may be greater than 1:1.7. The ratio may be greater than 1:1.6. Advantageously, ratios in these ranges have been found to reduce a distance between a ground surface and a lowermost surface of the operator cab, particularly when standard cab sizes are used with the working machine. Operator cab size is restricted by EN1459-2 and ISO2867, therefore it is difficult to reduce the height of the operator cab whilst complying with these regulations. Ratios within these ranges are greater than the ratios of traditional machines of this type, therefore the height of the undercarriage (and therefore the distance between the operator cab and the ground surface) must be reduced to achieve these ratios for a standard cab size.

A distance between an uppermost surface of the undercarriage and a ground surface may be up to 1200mm. The distance may be up to 1100mm, or up to 1000mm.

A distance between a ground surface and a lowermost surface of the operator cab may be up to 1250mm. The distance may be up to 1235mm.

A length of the wheelbase may be up to 2700mm. The length may be up to 2550mm. Advantageously, wheelbases with length within this upper limit enable a reduced length of the undercarriage.

A ratio of a length of the wheelbase to a length of the working machine extending along the longitudinal axis of the working machine may be greater than 1: 1.96. The ratio may be greater than 1:1.76.

The undercarriage may comprise an access arrangement located on the cab side and/or lifting arm side of the working machine configured to enable an operator to access an uppermost surface of the undercarriage from a ground surface. Advantageously, the provision of an access arrangement meets the requirements of EN1459-2 and ISO2867 and enables access to the uppermost surface of the working machine, for example during operation of the working machine and/or for maintenance and repairs.

The radiator panel may be located adjacent the access arrangement, for example forward of the access arrangement. Advantageously, the position of the cooling arrangement adjacent the access arrangement helps to decrease the height of the undercarriage without increasing the width of the undercarriage by utilising the width already taken up by the access arrangement.

The undercarriage may comprise a first access arrangement, and the first access arrangement may comprise no more than two steps, a first lower step and a second upper step. Advantageously, the provision of two steps located on the undercarriage enables the working machine to have a reduced height whilst meeting the requirements of EN1459-2 and ISO2867, thereby improving the compactness of the working machine.

A distance between the first step and a ground surface may be up to 550mm. Advantageously, the provision of a first step spaced apart from the ground surface steps enables two steps to be used within the confinements of EN1459-2 and ISO2867.

A distance between the first step and the second step may be up to 350mm. Advantageously, these distances between the first step and the second step enable the working machine to have a reduced height whilst meeting the requirements of EN1459-2 and ISO2867, thereby improving the compactness of the working machine.

The undercarriage may comprise respective first and second access arrangements on the cab side and lifting arm side of the undercarriage. Advantageously, providing access arrangements on both sides of the undercarriage provides the operator with convenient access to the operator cab and/or the uppermost surface of the undercarriage regardless of the superstructure's orientation or position relative to the undercarriage. This increases flexibility and efficiency in different working environments, for example in confined spaces.

The undercarriage may comprise an auxiliary access step arrangement located on front and/or rear sides of the undercarriage. Advantageously, providing steps on the front and/or rear sides of the undercarriage provides the operator with convenient access to the operator cab and/or the uppermost surface of the undercarriage regardless of the superstructure's orientation or position. This increases flexibility and efficiency in different working environments, for example in confined spaces.

A first auxiliary access step arrangement may be located on the front side of the undercarriage, and a distance between the first auxiliary access step arrangement and a closest sidewall of the operator cab may be up to 1400mm, for example up to 1200mm when the superstructure is rotated 90° clockwise from a forward aligned or roading position.

A second auxiliary access step arrangement may be located on the rear side of the undercarriage, and a distance between the second auxiliary access step arrangement and a closest sidewall of the operator cab may be up to 1400mm, for example up to 1200mm when the operator cab is rotated 90° anti-clockwise from a forward aligned or roading position.

The drive arrangement may further comprise an exhaust arrangement.

The exhaust arrangement may comprise an exhaust conduit which extends in a direction away from the prime mover in a generally horizontal direction. Advantageously, the extension of the exhaust away from the prime mover helps to reduce the vertical extension of the exhaust manifold, thereby helping to reduce the height of the undercarriage.

The exhaust extends in a direction towards the front of the working machine. Advantageously, the extension of the exhaust towards the front side of the working machine helps to reduce the vertical extension of the exhaust, thereby helping to reduce the height of the undercarriage.

The exhaust arrangement may not extend beyond the uppermost surface of the undercarriage. Advantageously, this arrangement has been found to reduce the height of the undercarriage, thereby improving compactness of the working machine.

The drive arrangement may comprise a prime mover housing configured to house the prime mover.

The prime mover housing may be a subassembly mounted to a structural frame of the undercarriage. The prime mover housing may be removably mounted. Advantageously, providing the prime mover housing as a removeable subassembly improves ease of assembly and/or maintenance of the working machine.

The prime mover housing may define a frontmost surface with respect to the direction of travel of the working machine, and the radiator panel may not extend beyond the frontmost surface of the prime mover housing. Advantageously, this arrangement of the radiator panel helps to reduce the length of the wheelbase, and therefore the length of the undercarriage.

The prime mover housing may define an outermost side located furthest away from the longitudinal axis of the working machine, and the radiator panel may be located on the outermost side of the prime mover housing. Advantageously, this arrangement utilises the space between the wheels to locate the radiator panel without increasing the overall width of the working machine.

A cooling pack may comprise a mounting arrangement configured to mount the radiator panel to the prime mover housing. Advantageously, the mounting arrangement improves assembly of the radiator panel to the prime mover housing, and helps to fix the position of the radiator panel during operation of the working machine.

The drive arrangement may comprise an air filter, and the prime mover may be located on an opposing side of the longitudinal axis of the working machine to the air filter.

An outer diameter of each of the wheels may be up to 1000mm. The outer diameter may be up to 950mm. Advantageously, diameters within these upper limits reduce the overall size of the undercarriage, thereby improving compactness of the working machine. In particular the height of the undercarriage, and therefore the overall machine may be reduced, whilst allowing one of the axles to articulate. In addition the width may be reduce. whilst maintaining steering lock for manoeuvrability. Further, the wheelbase and therefore overall machine length may be reduced whilst still enabling the engine and radiator panel to be fitted between the wheels.

Each of the wheels may comprise a semi solid tyre. Advantageously, semi solid tyres are readily provided at the sizes outlined above, and provide cushioning during working operations. Additionally, semi solid tyres have improved puncture resistance, thereby leading to reduced maintenance costs.

The undercarriage may comprise at least one fender located above at least one of the wheels, an entirety of the fender may be located at or below the uppermost surface of the undercarriage. Advantageously, the at least one fender provides protection to the wheels and other adjacent components by providing a guard from debris and other objects during operation of the working machine. Additionally, the at least one fender improves cleanliness of the working machine by guarding the superstructure 18 from debris and dirt.

The undercarriage may define an uppermost surface, and the at least one fender forms part of the uppermost surface.

The undercarriage may define an uppermost surface, and the uppermost surface may define an access surface, for example a platform or walkway, above which the operator cab may be configured to rotate.

The undercarriage may define a substantially planar uppermost surface.

A maximum lift height of the lifting arm may be up to 13m, for example up to 12.4.

A load capacity of the lifting arm may be up to 3 tonnes, for example up to 2.5 tonnes.

The lifting arm may be a telescopic lifting arm. Advantageously, the telescopic lifting arm increases the reach and lift height thereby improving the overall versatility of the working machine.

The lifting arm may be offset from a centreline of the working machine. Advantageously, this enables the machine to accommodate a full width cab despite its relatively narrow overall width.

A second aspect of the present teachings relates to a working machine comprising a front side and rear side defined by the principal direction of travel, and a cab side and a lifting arm side on either side of a longitudinal axis of the working machine, the working machine comprising: a ground engaging structure comprising front and rear wheels; a body comprising an undercarriage supported on the ground engaging structure and a superstructure mounted to the undercarriage; a drive arrangement comprising a prime mover mounted to the undercarriage and operable to provide motive power to the ground engaging structure, said prime mover comprising an internal combustion engine; an operator cab mounted to the superstructure in a position offset from the centre of the superstructure so as to be positioned proximate to the cab side; and a lifting arm extending generally fore-aft for performing work functions and pivotable about a first generally horizontal axis, wherein a height between a ground surface and an uppermost surface of the undercarriage is up to 1200mm, for example up to 1000mm.

Advantageously, the distances in these ranges enable the working machine to have a reduced height whilst meeting the requirements of EN1459-2 and ISO2867, thereby improving the compactness of the working machine. A working machine with reduced compactness may have improved manoeuvrability and versatility, enabling there use on construction sites with spatial restrictions. Additionally, a more compact working machine may require lower material costs, less fuel to operate and/or lower maintenance costs, thereby improving the cost effectiveness of the working machine.

The superstructure may be rotatably mounted to the undercarriage.

A longitudinal axis of the prime mover may extend along an axis substantially parallel to the central longitudinal axis of the working machine. Advantageously, arranging the prime mover along the axis parallel to the longitudinal axis of the working machine helps reduce a width of the prime mover in a direction transverse the longitudinal axis, and helps to enable the outboard positioning of the radiator panel with respect to the prime mover.

The undercarriage may comprise a structural frame extending parallel to the longitudinal axis and the prime mover may be mounted outboard of the structural frame. Advantageously, this allows the engine to be accessible for maintenance.

The working machine may comprise a cooling arrangement configured to cool the prime mover, said cooling arrangement comprising a radiator panel.

The radiator panel may be arranged outboard of the prime mover with respect to the longitudinal axis of the working machine.

The prime mover may be at least partially interposed between the radiator panel and the undercarriage. Advantageously, interposing the prime mover at least partially between the radiator panel and the undercarriage enables the undercarriage to have a reduced size without increasing the width of the working machine, thereby improving the compactness of the working machine whilst meeting the requirements of EN1459-2 and ISO2867.

A majority of the prime mover may be interposed between the radiator panel and the undercarriage. Advantageously, interposing the majority of the prime mover between the radiator panel and the undercarriage enables the undercarriage to have a reduced size fore-aft without increasing the width of the working machine, thereby improving the compactness of the working machine whilst meeting the requirements of EN1459-2 and ISO2867.

The radiator panel may be interposed between front and rear wheels. Advantageously, the position of the radiator panel between the front and rear wheels reduces the size of the undercarriage without increasing the overall width of the working machine.

The radiator panel may not extend beyond the front and rear wheels. Advantageously, this arrangement reduces the size of the undercarriage without increasing the overall width of the working machine.

The radiator panel may form part of a cooling pack. The cooling pack may comprise a cooling fan mounted to the radiator panel. Advantageously, the cooling fan draws air towards the radiator panel for cooling.

The undercarriage may define a length extending along the longitudinal axis of the working machine, and the length may be up to 5000mm. The length may be up to 4500mm. Advantageously, lengths in these ranges are less than traditional working machines of this type, thereby increasing compactness and manoeuvrability of the working machine.

The working machine may define a height extending along an axis perpendicular to the longitudinal axis of the working machine, and wherein the height may be up to 3000mm. The height may be up to 2800mm. Advantageously, heights in these ranges are less than traditional working machines of this type, thereby increasing compactness and manoeuvrability of the working machine.

The working machine may define a width extending along an axis perpendicular to the longitudinal axis of the working machine, and the width may be up to 2500mm. The width may be up to 2400mm. Advantageously, widths in these ranges are less than traditional working machines of this type, thereby increasing compactness and manoeuvrability of the working machine.

A ratio of a height of the operator cab to a height of the undercarriage may be greater than 1:0.7. The ratio may be greater than 1:0.63. Advantageously, ratios in these ranges have been found to reduce a distance between a ground surface and a lowermost surface of the operator cab, particularly when standard cab sizes are used with the working machine. Operator cab size is restricted by EN1459-2 and ISO2867, therefore it is difficult to reduce the height of the operator cab whilst complying with these regulations. Ratios within these ranges are greater than the ratios of traditional machines of this type, therefore the height of the undercarriage (and therefore the distance between the operator cab and the ground surface) must be reduced to achieve these ratios for a standard cab size.

A ratio of a height of the operator cab to a height of the working machine may be greater than 1:1.7. The ratio may be greater than 1:1.6. Advantageously, ratios in these ranges have been found to reduce a distance between a ground surface and a lowermost surface of the operator cab, particularly when standard cab sizes are used with the working machine. Operator cab size is restricted by EN1459-2 and ISO2867, therefore it is difficult to reduce the height of the operator cab whilst complying with these regulations. Ratios within these ranges are greater than the ratios of traditional machines of this type, therefore the height of the undercarriage (and therefore the distance between the operator cab and the ground surface) must be reduced to achieve these ratios for a standard cab size.

A distance between a ground surface and a lowermost surface of the operator cab may be up to 1250mm. The distance may be up to 1235mm.

A length of the wheelbase may be up to 2700mm. The length may be up to 2550mm. Advantageously, wheelbases with length within this upper limit enable a reduced length of the undercarriage.

A ratio of a length of the wheelbase to a length of the working machine extending along the longitudinal axis of the working machine may be greater than 1: 1.96. The ratio may be greater than 1:1.76.

The undercarriage may comprise an access arrangement located on the cab side and/or lifting arm side of the working machine configured to enable an operator to access an uppermost surface of the undercarriage from a ground surface. Advantageously, the provision of an access arrangement meets the requirements of EN1459-2 and ISO2867 and enables access to the uppermost surface of the working machine, for example during operation of the working machine and/or for maintenance and repairs.

The radiator panel may be located adjacent the access arrangement, for example forward of the access arrangement. Advantageously, the position of the cooling arrangement adjacent the access arrangement helps to decrease the height of the undercarriage without increasing the width of the undercarriage by utilising the width already taken up by the access arrangement.

The undercarriage may comprise a first access arrangement, and the first access arrangement may comprise no more than two steps, a first lower step and a second upper step. Advantageously, the provision of two steps located on the undercarriage enables the working machine to have a reduced height whilst meeting the requirements of EN1459-2 and ISO2867, thereby improving the compactness of the working machine.

A distance between the first step and a ground surface may be up to 550mm. Advantageously, the provision of a first step spaced apart from the ground surface steps enables two steps to be used within the confinements of EN1459-2 and ISO2867.

A distance between the first step and the second step may be up to 350mm. Advantageously, these distances between the first step and the second step enable the working machine to have a reduced height whilst meeting the requirements of EN1459-2 and ISO2867, thereby improving the compactness of the working machine.

The undercarriage may comprise respective first and second access arrangements on the cab side and lifting arm side of the undercarriage. Advantageously, providing access arrangements on both sides of the undercarriage provides the operator with convenient access to the operator cab and/or the uppermost surface of the undercarriage regardless of the superstructure's orientation or position relative to the undercarriage. This increases flexibility and efficiency in different working environments, for example in confined spaces.

The undercarriage may comprise an auxiliary access step arrangement located on front and/or rear sides of the undercarriage. Advantageously, providing steps on the front and/or rear sides of the undercarriage provides the operator with convenient access to the operator cab and/or the uppermost surface of the undercarriage regardless of the superstructure's orientation or position. This increases flexibility and efficiency in different working environments, for example in confined spaces.

A first auxiliary access step arrangement may be located on the front side of the undercarriage, and a distance between the first auxiliary access step arrangement and a closest sidewall of the operator cab may be up to 1400mm, for example up to 1200mm when the superstructure is rotated 90° clockwise from a forward aligned or roading position.

A second auxiliary access step arrangement may be located on the rear side of the undercarriage, and a distance between the second auxiliary access step arrangement and a closest sidewall of the operator cab may be up to 1400mm, for example up to 1200mm when the operator cab is rotated 90° anti-clockwise from a forward aligned or roading position.

The drive arrangement may further comprise an exhaust arrangement.

The exhaust arrangement may comprise an exhaust conduit which extends in a direction away from the prime mover in a generally horizontal direction. Advantageously, the extension of the exhaust away from the prime mover helps to reduce the vertical extension of the exhaust manifold, thereby helping to reduce the height of the undercarriage.

The exhaust extends in a direction towards the front of the working machine. Advantageously, the extension of the exhaust towards the front side of the working machine helps to reduce the vertical extension of the exhaust, thereby helping to reduce the height of the undercarriage.

The exhaust arrangement may not extend beyond the uppermost surface of the undercarriage. Advantageously, this arrangement has been found to reduce the height of the undercarriage, thereby improving compactness of the working machine.

The drive arrangement may comprise a prime mover housing configured to house the prime mover.

The prime mover housing may be a subassembly mounted to a structural frame of the undercarriage. The prime mover housing may be removably mounted. Advantageously, providing the prime mover housing as a removeable subassembly improves ease of assembly and/or maintenance of the working machine.

The prime mover housing may define a frontmost surface with respect to the direction of travel of the working machine, and the radiator panel may not extend beyond the frontmost surface of the prime mover housing. Advantageously, this arrangement of the radiator panel helps to reduce the length of the wheelbase, and therefore the length of the undercarriage.

The prime mover housing may define an outermost side located furthest away from the longitudinal axis of the working machine, and the radiator panel may be located on the outermost side of the prime mover housing. Advantageously, this arrangement utilises the space between the wheels to locate the radiator panel without increasing the overall width of the working machine.

A cooling pack may comprise a mounting arrangement configured to mount the radiator panel to the prime mover housing. Advantageously, the mounting arrangement improves assembly of the radiator panel to the prime mover housing, and helps to fix the position of the radiator panel during operation of the working machine.

The drive arrangement may comprise an air filter, and the prime mover may be located on an opposing side of the longitudinal axis of the working machine to the air filter.

An outer diameter of each of the wheels may be up to 1000mm. The outer diameter may be up to 950mm. Advantageously, diameters within these upper limits reduce the overall size of the undercarriage, thereby improving compactness of the working machine. In particular the height of the undercarriage, and therefore the overall machine may be reduced, whilst allowing one of the axles to articulate. In addition the width may be reduce. whilst maintaining steering lock for manoeuvrability. Further, the wheelbase and therefore overall machine length may be reduced whilst still enabling the engine and radiator panel to be fitted between the wheels.

Each of the wheels may comprise a semi solid tyre. Advantageously, semi solid tyres are readily provided at the sizes outlined above, and provide cushioning during working operations. Additionally, semi solid tyres have improved puncture resistance, thereby leading to reduced maintenance costs.

The undercarriage may comprise at least one fender located above at least one of the wheels, an entirety of the fender may be located at or below the uppermost surface of the undercarriage. Advantageously, the at least one fender provides protection to the wheels and other adjacent components by providing a guard from debris and other objects during operation of the working machine. Additionally, the at least one fender improves cleanliness of the working machine by guarding the superstructure 18 from debris and dirt.

The undercarriage may define an uppermost surface, and the at least one fender forms part of the uppermost surface.

The undercarriage may define an uppermost surface, and the uppermost surface may define an access surface, for example a platform or walkway, above which the operator cab may be configured to rotate.

The undercarriage may define a substantially planar uppermost surface.

A maximum lift height of the lifting arm may be up to 13m, for example up to 12.4.

A load capacity of the lifting arm may be up to 3 tonnes, for example up to 2.5 tonnes.

The lifting arm may be a telescopic lifting arm. Advantageously, the telescopic lifting arm increases the reach and lift height thereby improving the overall versatility of the working machine.

The lifting arm may be offset from a centreline of the working machine. Advantageously, this enables the machine to accommodate a full width cab despite its relatively narrow overall width.

A third aspect of the present teachings relates to a working machine comprising a front side and rear side defined by the principal direction of travel, and a cab side and a lifting arm side on either side of a longitudinal axis of the working machine, the working machine comprising: a ground engaging structure comprising front and rear wheels; a body comprising an undercarriage supported on the ground engaging structure and a superstructure mounted to the undercarriage; a drive arrangement comprising a prime mover mounted to the undercarriage and operable to provide motive power to the ground engaging structure, said prime mover comprising an internal combustion engine; an operator cab mounted to the superstructure in a position offset from the centre of the superstructure so as to be positioned proximate to the cab side; and a lifting arm extending generally fore-aft for performing work functions and pivotable about a first generally horizontal axis, wherein the undercarriage has a first step provided at a side of the undercarriage at a height of up to 550mm and a second step at a height of up to 350mm above the first step and a floor level of the operator cab is up to 350mm above the second step.

The superstructure may be rotatably mounted to the undercarriage.

A longitudinal axis of the prime mover may extend along an axis substantially parallel to the central longitudinal axis of the working machine. Advantageously, arranging the prime mover along the axis parallel to the longitudinal axis of the working machine helps reduce a width of the prime mover in a direction transverse the longitudinal axis, and helps to enable the outboard positioning of the radiator panel with respect to the prime mover.

The undercarriage may comprise a structural frame extending parallel to the longitudinal axis and the prime mover may be mounted outboard of the structural frame. Advantageously, this allows the engine to be accessible for maintenance.

The working machine may comprise a cooling arrangement configured to cool the prime mover, said cooling arrangement comprising a radiator panel.

The radiator panel may be arranged outboard of the prime mover with respect to the longitudinal axis of the working machine.

The prime mover may be at least partially interposed between the radiator panel and the undercarriage. Advantageously, interposing the prime mover at least partially between the radiator panel and the undercarriage enables the undercarriage to have a reduced size without increasing the width of the working machine, thereby improving the compactness of the working machine whilst meeting the requirements of EN1459-2 and ISO2867.

A majority of the prime mover may be interposed between the radiator panel and the undercarriage. Advantageously, interposing the majority of the prime mover between the radiator panel and the undercarriage enables the undercarriage to have a reduced size fore-aft without increasing the width of the working machine, thereby improving the compactness of the working machine whilst meeting the requirements of EN1459-2 and ISO2867.

The radiator panel may be interposed between front and rear wheels. Advantageously, the position of the radiator panel between the front and rear wheels reduces the size of the undercarriage without increasing the overall width of the working machine.

The radiator panel may not extend beyond the front and rear wheels. Advantageously, this arrangement reduces the size of the undercarriage without increasing the overall width of the working machine.

The radiator panel may form part of a cooling pack. The cooling pack may comprise a cooling fan mounted to the radiator panel. Advantageously, the cooling fan draws air towards the radiator panel for cooling.

The undercarriage may define a length extending along the longitudinal axis of the working machine, and the length may be up to 5000mm. The length may be up to 4500mm. Advantageously, lengths in these ranges are less than traditional working machines of this type, thereby increasing compactness and manoeuvrability of the working machine.

The working machine may define a height extending along an axis perpendicular to the longitudinal axis of the working machine, and wherein the height may be up to 3000mm. The height may be up to 2800mm. Advantageously, heights in these ranges are less than traditional working machines of this type, thereby increasing compactness and manoeuvrability of the working machine.

The working machine may define a width extending along an axis perpendicular to the longitudinal axis of the working machine, and the width may be up to 2500mm. The width may be up to 2400mm. Advantageously, widths in these ranges are less than traditional working machines of this type, thereby increasing compactness and manoeuvrability of the working machine.

A ratio of a height of the operator cab to a height of the undercarriage may be greater than 1:0.7. The ratio may be greater than 1:0.63. Advantageously, ratios in these ranges have been found to reduce a distance between a ground surface and a lowermost surface of the operator cab, particularly when standard cab sizes are used with the working machine. Operator cab size is restricted by EN1459-2 and ISO2867, therefore it is difficult to reduce the height of the operator cab whilst complying with these regulations. Ratios within these ranges are greater than the ratios of traditional machines of this type, therefore the height of the undercarriage (and therefore the distance between the operator cab and the ground surface) must be reduced to achieve these ratios for a standard cab size.

A ratio of a height of the operator cab to a height of the working machine may be greater than 1:1.7. The ratio may be greater than 1:1.6. Advantageously, ratios in these ranges have been found to reduce a distance between a ground surface and a lowermost surface of the operator cab, particularly when standard cab sizes are used with the working machine. Operator cab size is restricted by EN1459-2 and ISO2867, therefore it is difficult to reduce the height of the operator cab whilst complying with these regulations. Ratios within these ranges are greater than the ratios of traditional machines of this type, therefore the height of the undercarriage (and therefore the distance between the operator cab and the ground surface) must be reduced to achieve these ratios for a standard cab size.

A distance between an uppermost surface of the undercarriage and a ground surface may be up to 1200mm. The distance may be up to 1100mm, or up to 1000mm.

A distance between a ground surface and a lowermost surface of the operator cab may be up to 1250mm. The distance may be up to 1235mm.

A length of the wheelbase may be up to 2700mm. The length may be up to 2550mm. Advantageously, wheelbases with length within this upper limit enable a reduced length of the undercarriage.

A ratio of a length of the wheelbase to a length of the working machine extending along the longitudinal axis of the working machine may be greater than 1: 1.96. The ratio may be greater than 1:1.76.

The undercarriage may comprise an access arrangement located on the cab side and/or lifting arm side of the working machine configured to enable an operator to access an uppermost surface of the undercarriage from a ground surface. Advantageously, the provision of an access arrangement meets the requirements of EN1459-2 and ISO2867 and enables access to the uppermost surface of the working machine, for example during operation of the working machine and/or for maintenance and repairs.

The radiator panel may be located adjacent the access arrangement, for example forward of the access arrangement. Advantageously, the position of the cooling arrangement adjacent the access arrangement helps to decrease the height of the undercarriage without increasing the width of the undercarriage by utilising the width already taken up by the access arrangement.

The undercarriage may comprise respective first and second access arrangements on the cab side and lifting arm side of the undercarriage. Advantageously, providing access arrangements on both sides of the undercarriage provides the operator with convenient access to the operator cab and/or the uppermost surface of the undercarriage regardless of the superstructure's orientation or position relative to the undercarriage. This increases flexibility and efficiency in different working environments, for example in confined spaces.

The undercarriage may comprise an auxiliary access step arrangement located on front and/or rear sides of the undercarriage. Advantageously, providing steps on the front and/or rear sides of the undercarriage provides the operator with convenient access to the operator cab and/or the uppermost surface of the undercarriage regardless of the superstructure's orientation or position. This increases flexibility and efficiency in different working environments, for example in confined spaces.

A first auxiliary access step arrangement may be located on the front side of the undercarriage, and a distance between the first auxiliary access step arrangement and a closest sidewall of the operator cab may be up to 1400mm, for example up to 1200mm when the superstructure is rotated 90° clockwise from a forward aligned or roading position.

A second auxiliary access step arrangement may be located on the rear side of the undercarriage, and a distance between the second auxiliary access step arrangement and a closest sidewall of the operator cab may be up to 1400mm, for example up to 1200mm when the operator cab is rotated 90° anti-clockwise from a forward aligned or roading position.

The drive arrangement may further comprise an exhaust arrangement.

The exhaust arrangement may comprise an exhaust conduit which extends in a direction away from the prime mover in a generally horizontal direction. Advantageously, the extension of the exhaust away from the prime mover helps to reduce the vertical extension of the exhaust manifold, thereby helping to reduce the height of the undercarriage.

The exhaust extends in a direction towards the front of the working machine. Advantageously, the extension of the exhaust towards the front side of working machine helps to reduce the vertical extension of the exhaust, thereby helping to reduce the height of the undercarriage.

The exhaust arrangement may not extend beyond the uppermost surface of the undercarriage. Advantageously, this arrangement has been found to reduce the height of the undercarriage, thereby improving compactness of the working machine.

The drive arrangement may comprise a prime mover housing configured to house the prime mover.

The prime mover housing may be a subassembly mounted to a structural frame of the undercarriage. The prime mover housing may be removably mounted. Advantageously, providing the prime mover housing as a removeable subassembly improves ease of assembly and/or maintenance of the working machine.

The prime mover housing may define a frontmost surface with respect to the direction of travel of the working machine, and the radiator panel may not extend beyond the frontmost surface of the prime mover housing. Advantageously, this arrangement of the radiator panel helps to reduce the length of the wheelbase, and therefore the length of the undercarriage.

The prime mover housing may define an outermost side located furthest away from the longitudinal axis of the working machine, and the radiator panel may be located on the outermost side of the prime mover housing. Advantageously, this arrangement utilises the space between the wheels to locate the radiator panel without increasing the overall width of the working machine.

A cooling pack may comprise a mounting arrangement configured to mount the radiator panel to the prime mover housing. Advantageously, the mounting arrangement improves assembly of the radiator panel to the prime mover housing, and helps to fix the position of the radiator panel during operation of the working machine.

The drive arrangement may comprise an air filter, and the prime mover may be located on an opposing side of the longitudinal axis of the working machine to the air filter.

An outer diameter of each of the wheels may be up to 1000mm. The outer diameter may be up to 950mm. Advantageously, diameters within these upper limits reduce the overall size of the undercarriage, thereby improving compactness of the working machine. In particular the height of the undercarriage, and therefore the overall machine may be reduced, whilst allowing one of the axles to articulate. In addition the width may be reduce. whilst maintaining steering lock for manoeuvrability. Further, the wheelbase and therefore overall machine length may be reduced whilst still enabling the engine and radiator panel to be fitted between the wheels.

Each of the wheels may comprise a semi solid tyre. Advantageously, semi solid tyres are readily provided at the sizes outlined above, and provide cushioning during working operations. Additionally, semi solid tyres have improved puncture resistance, thereby leading to reduced maintenance costs.

The undercarriage may comprise at least one fender located above at least one of the wheels, an entirety of the fender may be located at or below the uppermost surface of the undercarriage. Advantageously, the at least one fender provides protection to the wheels and other adjacent components by providing a guard from debris and other objects during operation of the working machine. Additionally, the at least one fender improves cleanliness of the working machine by guarding the superstructure 18 from debris and dirt.

The undercarriage may define an uppermost surface, and the at least one fender forms part of the uppermost surface.

The undercarriage may define an uppermost surface, and the uppermost surface may define an access surface, for example a platform or walkway, above which the operator cab may be configured to rotate.

The undercarriage may define a substantially planar uppermost surface.

A maximum lift height of the lifting arm may be up to 13m, for example up to 12.4.

A load capacity of the lifting arm may be up to 3 tonnes, for example up to 2.5 tonnes.

The lifting arm may be a telescopic lifting arm. Advantageously, the telescopic lifting arm increases the reach and lift height thereby improving the overall versatility of the working machine.

The lifting arm may be offset from a centreline of the working machine. Advantageously, this enables the machine to accommodate a full width cab despite its relatively narrow overall width.

### BRIEF DESCRIPTION OF THE DRAWINGS

Embodiments will now be described with reference to the accompanying drawings, in which:
Figure 1 is a first isometric view of a working machine according to the present teachings;
Figure 2a is a lifting arm side view of the working machine of Figure 1;
Figure 2b is a cab side view of the working machine of Figure 1;
Figure 3a is a front view of the working machine of Figure 1;
Figure 3b is a rear view of the working machine of Figure 1;
Figures 4a and 4b are plan views of the top of the working machine of Figure 1;
Figure 4c is a view of the bottom of the working machine of Figure 1;
Figure 5 is an isometric view of a portion of an undercarriage of the working machine of Figure 1 with a portion of a prime mover housing removed;
Figure 6a is an isometric view of the undercarriage of Figure 5 with a portion of a prime mover housing removed;
Figure 6b is a side view of the undercarriage of Figure 5 with the portion of the prime mover housing of Figure 6a removed; and
Figure 7 is a plan view of the top of the undercarriage of Figure 5.

### DETAILED DESCRIPTION OF EMBODIMENTS)

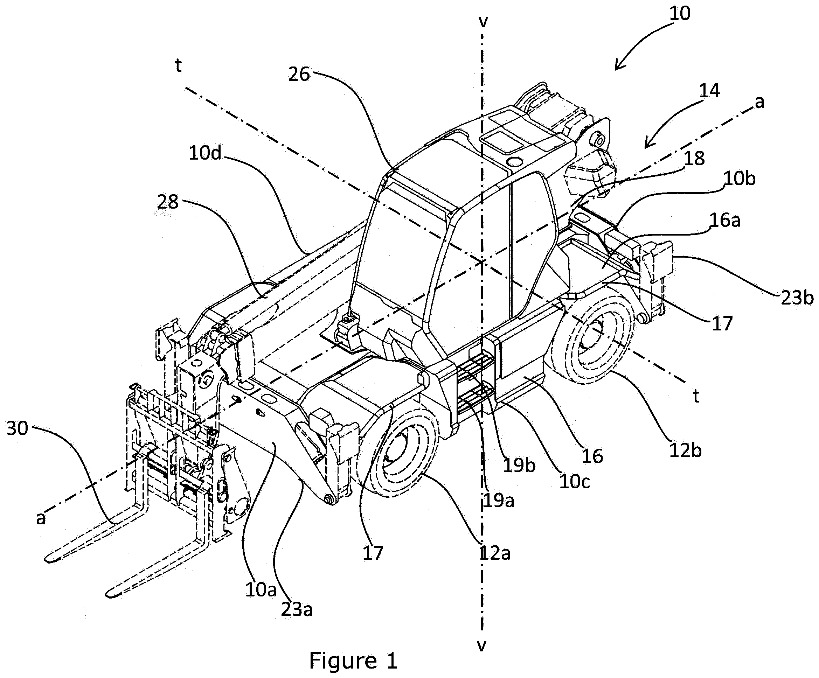

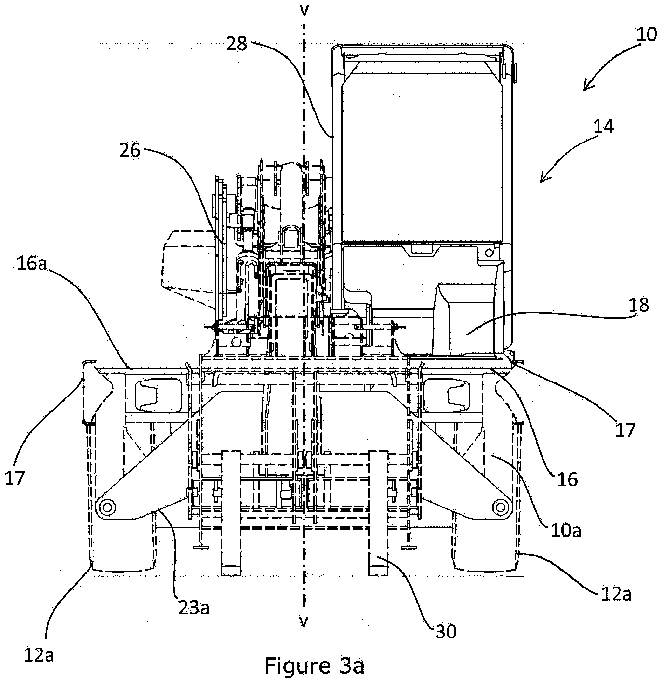

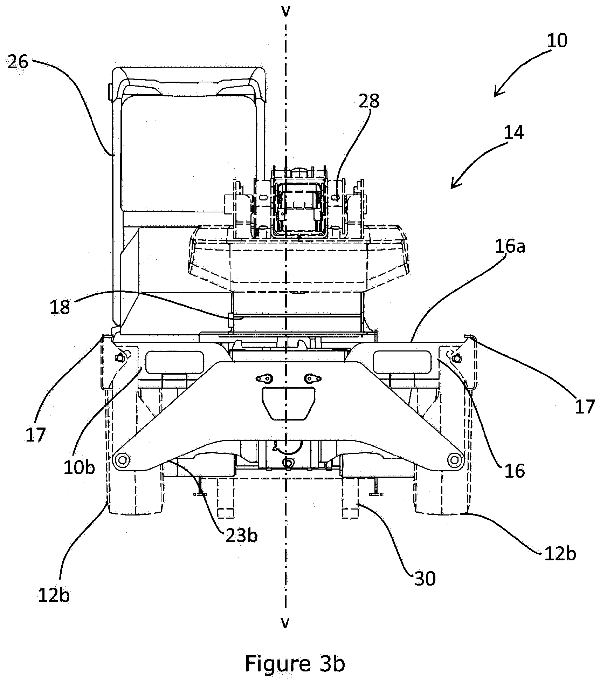

Referring firstly to Figures 1 to 4c, there is shown a working machine 10 in the form of a rotary telehandler. The rotary telehandler is a compact rotary telehandler. It shall be appreciated that in alternative embodiments, the working machine 10 may be a compact wheeled slew excavator, for example. A mass of the rotary telehandler is up to 10,500kg, for example up to 10,300kg. The working machine 10 includes a front side 10a, illustrated in Figure 3a, and a rear side 10b, illustrated in Figure 3b, defined by a principal direction of travel, a cab side 10c and an offside or lifting arm side 10d. The cab side 10c and the lifting arm side 10d are located on either side of a longitudinal axis a-a of the working machine 10.

The working machine includes a ground engaging structure 12a, 12b, a body 14 including a superstructure 18 and an undercarriage 16 supported on the ground engaging structure 12a, 12b, a drive arrangement 22, an operator station in the form of a cab 26, a lifting arm 28 and a cooling arrangement 37. In Figure 1, the working machine 10 is illustrated in a forward aligned position. The forward aligned position is taken to mean that a longitudinal axis of the undercarriage 16 is parallel to a longitudinal axis of the lifting arm 28 and the drive arrangement 22 is on the opposite side of the axis a-a with respect to the cab 26.

The structural strength of the undercarriage 16 is provided by an undercarriage frame 15 comprising first and second spaced vertical plates 15a and 15b interconnected by a horizontal upper plate 15c to form an "n" profile extending fore-aft parallel to the axis a-a. The frame 15 mounts the ground engaging structure 12a, 12b, the superstructure 18 and stabilisers arrangements 23a, 23b (see below). In alternative embodiments, the undercarriage frame 15 may be formed from box sections mounted to the ground engaging structure 12a, 12b.

The working machine 10 defines a height extending along a vertical axis v-v perpendicular to the longitudinal axis a-a of the working machine 10. The height of the working machine 10 is up to 3000mm. In the embodiment of Figures 1 to 4c, the height is up to 2800mm. The working machine 10 defines a width extending along a transverse axis t-t perpendicular to the longitudinal axis of the working machine 10. The width axis is also perpendicular to the vertical axis v-v. The width of the working machine 10 is up to up to 2500mm. In the embodiment of Figures 1 to 4c, the width is up to 2400mm.

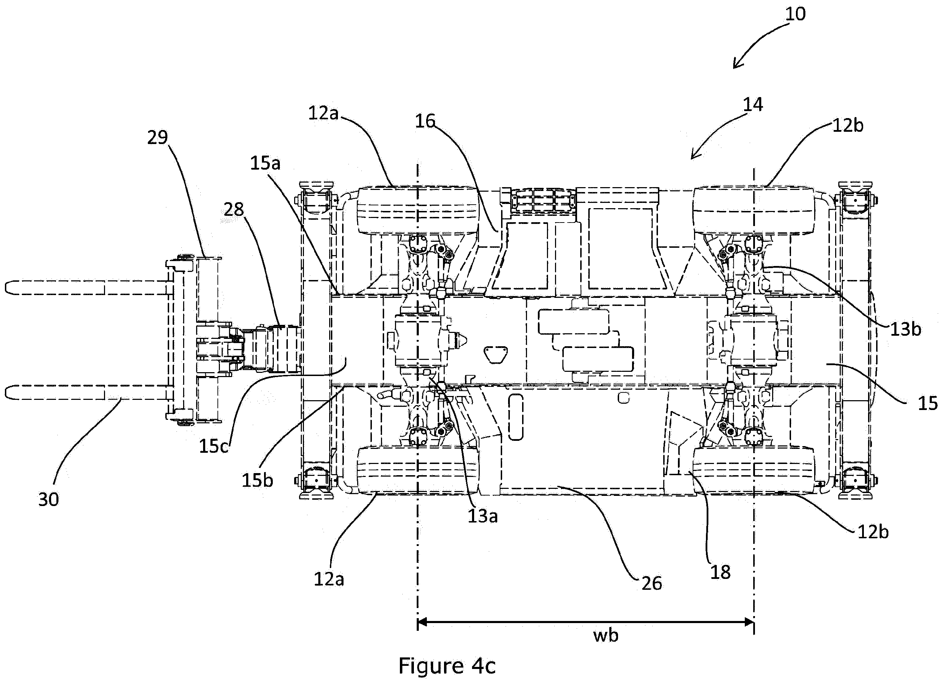

The ground engaging structure 12a, 12b is provided in the form of front and rear wheels 12a, 12b. The ground engaging structure 12a, 12b of this embodiment may be configured to provide four-wheel steering, as is known in the art. As such, both of the front and rear wheels 12a, 12b may be configured to turn relative to the body 14 under the influence of a steering device provided within the operator cab 26 to effect steering. The compact size of the working machine 10, along with the four-wheel steering capabilities, makes the working machine 10 suitable for operating in confined spaces. The front and rear wheels 12a, 12b are attached to corresponding axles 13a, 13b, illustrated in Figure 4c, which form part of a transmission of the working machine 10. A wheelbase is defined as a distance wb between a central longitudinal axis of each of the axles 13a, 13b

Each of the wheels 12a, 12b defines an outer diameter. It shall be appreciated that the outer diameter includes tyres. The outer diameter of each of the wheels 12a, 12b is up to 1000mm. In this embodiment, the outer diameter of each of the wheels 12a, 12b is up to 920mm. This small compared to traditional rotary telehandler, wherein the wheels generally have an outer diameter of approximately 1100mm. Diameters in this range have been found to reduce the overall size of the undercarriage 16. This is because the size of the wheel base (i.e. the distance wb) can be reduced because the clearance between each of the wheels 12a, 12b and the undercarriage 16 for the wheels to steer about a vertical axis is reduced. Put another way, the clearance for the wheels to miss the undercarriage 16 when they are steered is reduced. This is particularly advantageous for the rear wheels 12b, because the rear axle 13b may oscillate independently of the front axle 13a about the axis a-a in order to improve stability over uneven terrain, thereby requiring a greater clearance between the rear wheels 12b and the undercarriage 16. The reduced wheelbase also enables a smaller turning circle for the working machine 10 to be achieved, further enhancing manoeuvrability.

Diameters of wheels 12a, 12b under these limits enable the overall height of the undercarriage 16 to be reduced. This helps to enable a more compact working machine 10. In this embodiment, the distance wb is up to 2700mm, for example up to 2550mm. Additionally, diameters of wheels 12a, 12b under these limits provide sufficient space to locate components of the drive arrangement 22 which are interposed between the wheels, despite the reduced wheelbase wb. This reduces the overall length of the working machine 10 whilst providing space to enable components of the drive arrangement 22 to be located on the undercarriage 16. A ratio of the distance wb to the length of the working machine may be greater than 1:1.96, for example greater than 1:1.76.

The wheels 12a, 12b each include a semi solid tyre. Semi solid tyres are readily provided at the sizes outlined above, and provide cushioning during working operations. Additionally, semi solid tyres have improved puncture resistance, thereby leading to reduced maintenance costs. It shall be appreciated that in alternative embodiments, pneumatic tyres may be used.

The body 14 includes the undercarriage 16 supported on the ground engaging structure 12 and the superstructure 18 mounted to the undercarriage 16. The superstructure 18 is connected to the undercarriage 16. The superstructure 18 is configured to rotate with respect to the undercarriage 16. More specifically, the superstructure 18 is configured to slew about the main vertical axis v-v with respect to the undercarriage 16. In this embodiments, the main vertical axis v-v is located on the longitudinal axis a-a of the working machine 10. The main vertical axis v-v is located equidistant between the front side 10a and the rear side 10b of the working machine 10 (i.e. the main vertical axis is located at a centre point of undercarriage 16 of the working machine 10). It shall be appreciated that in alternative embodiments, the vertical axis v-v may be offset from the centre of the working machine 10 in either the longitudinal direction or a transverse direction t-t.

The superstructure 18 is connected to the undercarriage 16 by a mounting arrangement 20. The mounting arrangement 20 is located on an uppermost surface 16a of the undercarriage 16. The uppermost surface 20 is substantially planar. The uppermost surface 16a is accessible by the operator. Put another way, the operator is free to access and move around on the uppermost surface when the operator is mounting/dismounting the operator cab 26 and/or during maintenance of the working machine 10.

In the arrangement shown, the mounting arrangement 20 includes a slewing mechanism in the form of a slew ring 20a. The mounting arrangement 20 permits the rotation of the superstructure 18 relative to the undercarriage 16. In this embodiment, the rotation of the superstructure 18 relative to the undercarriage 16 is restricted.

The superstructure 18 may be configured to rotate through an angle up to 600° relative to the undercarriage, for example up to 450° relative to the undercarriage 16. This arrangement is known as limited angle non-continuous slew. By way of example, in an embodiment wherein slew is limited to 400°, the superstructure 18 is configured to slew 200° clockwise from the forward aligned position, and 200° anti-clockwise from the forward aligned position. Slew may be limited through a slew angle sensor and using a control system, and a mechanical hard stop may be provided in addition to restrict slewing of the superstructure 18.

The mounting arrangement 20 of this embodiment includes a swivel joint or a rotary manifold (not shown) to enable restricted slewing of the superstructure 18 with respect to the undercarriage 16. The swivel joint is located at the connection between the superstructure 18 and the undercarriage 16. The swivel joint includes a set of hydraulic hoses which are wound into a coil to form a flexible connection. As the superstructure 18 rotates which respect to the undercarriage 16, the coiled hoses flex and rotate with the superstructure 18. The hydraulic hoses of the swivel joint provide a pathway for hydraulic fluid to flow from the undercarriage 16 to the superstructure 18. The hoses therefore connect a hydraulic system, which is described in more detail below, to hydraulic systems of the superstructure 18. The swivel joint may include seals and protective covers configured to help prevent hydraulic fluid leakage and protect the hoses from external elements.

In order for the hydraulic hoses to flex as the superstructure 18 rotates, the majority of hoses passing through the superstructure 18 are of a relatively small external diameter, for example up to 15mm. The smaller diameter of the hydraulic hoses improves bending performance. A minority of the hydraulic hoses have a relatively large external diameter, for example more than 35mm, to reduce pressure drop of the hydraulic fluid along the length of the hydraulic hose. For example, a hydraulic return hose may be provided for returning hydraulic fluid to a hydraulic tank (not shown) with a minimum pressure resistance. Such large diameter hoses have been known to wear throughout their lifespan. In order to reduce wear on the hydraulic return hoses, two smaller hydraulic return hoses are provided. The two hydraulic return hoses provide the same combined low pressure drop along their length compared to the larger diameter hydraulic return hose, whilst improving flexibility of the hydraulic return hoses and reducing the likelihood of premature wear.

It shall be appreciated that in alternative embodiments, the rotation of the superstructure 18 may be unlimited, and a central rotary joint may be provided instead of a swivel joint.

The working machine 10 includes the lifting arm 28 which is mounted to the superstructure 18 for rotation about a generally horizontal axis. In the embodiment of Figures 1a to 5b, the lifting arm 28 is a telescopic lifting arm and is pivotally mounted to the superstructure 18 at or proximate the rear thereof, and extends forward to project beyond the front of the superstructure. It shall be appreciated that in alternative embodiments, the lifting arm 28 may be not telescopic, for example if the working machine 10 is a compact wheeled excavator, may be mounted proximate the front of the superstructure may have a dipper arm (not shown) pivotably mounted to a free end thereof, and may slew relative to the superstructure. A maximum lift height of the lifting arm 28 may be up to 13m, for example up to 12.4. A load capacity of the lifting arm 28 may be up to 3 tonnes, for example up to 2.5 tonnes.

As the lifting arm 28 is connected to the superstructure 18, and therefore rotates with the superstructure 18 relative to the undercarriage 16 about the main vertical axis v-v.

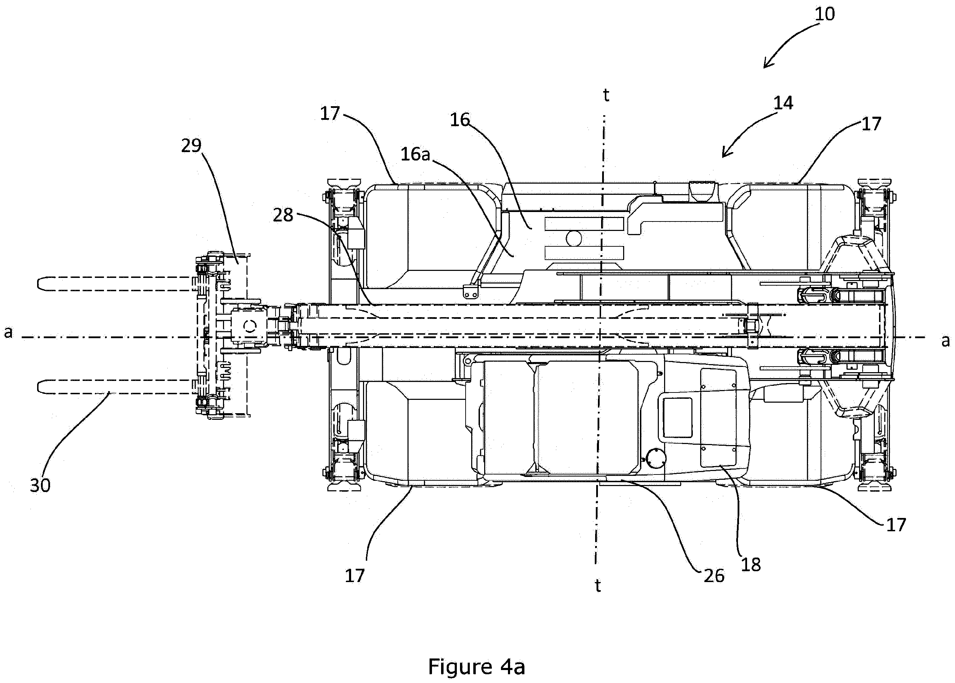

The lifting arm 28 mounts an implement to perform work functions. The lifting arm 28 is mounted to the superstructure 18 in a position offset from the longitudinal axis a-a of the working machine 10, as illustrated in Figure 4a, so as to be positioned closer to the lifting arm side 10d than the cab side 10c. As can be seen from Figure 4a in particular, despite the offset being limited, the axis a-a does intersect the lifting arm 28. The offset allows the working machine to be provided with a full width cab 28 (internal width in excess of 800mm, e.g. 830mm) to enhance operator comfort.

The lifting arm 28 is configured to carry a load handling implement 30, such as a shovel or forks 30, at a second end to allow the load handling implement 30 to pivot relative to the lifting arm 28 about a second generally horizontal axis. Specifically, the load handling implement 30 is mounted to a carriage 29 having a suitable known interface to the implement, the carriage being pivotable relative to the lifting arm 28. so that a load may be kept in a constant horizontal or other desired orientation as the lifting arm 28 pivots up and down, as is well known in the art. As can be seen in Figures 4a to 4c most clearly, the carriage 29 is mounted in an offset position relative to the lifting arm 28 so that the implement 30 is centrally mounted in line with axis a-a (when the superstructure 18 is aligned with axis a-a) despite the lifting arm being offset.

The undercarriage 16 includes at least one fender 17 located above at least one of the wheels 12a, 12b, a stabiliser arrangement 23a, 23b, an access arrangement 19a-d and/or an auxiliary access arrangement 21a, 21b.

The undercarriage 16 defines a length extending along the longitudinal axis a-a of the working machine 10. The length is up to 5000mm. In the embodiment illustrated in Figures 1 to 4c, the length is up to 4500mm. Lengths in these ranges are less than traditional working machines of this type, i.e. known rotary telehandlers. The undercarriage 16 defines a height extending along an axis parallel on the axis v-v of the working machine 10. The height is up to [800mm, for example 780mm], resulting in ground clearance between the wheels 12a and 12b of at least 210mm, e.g. 235mm. Heights and lengths within these ranges are less than typical rotary telehandlers, which typically have a length greater than 5000mm and a ground clearance greater than 280mm.

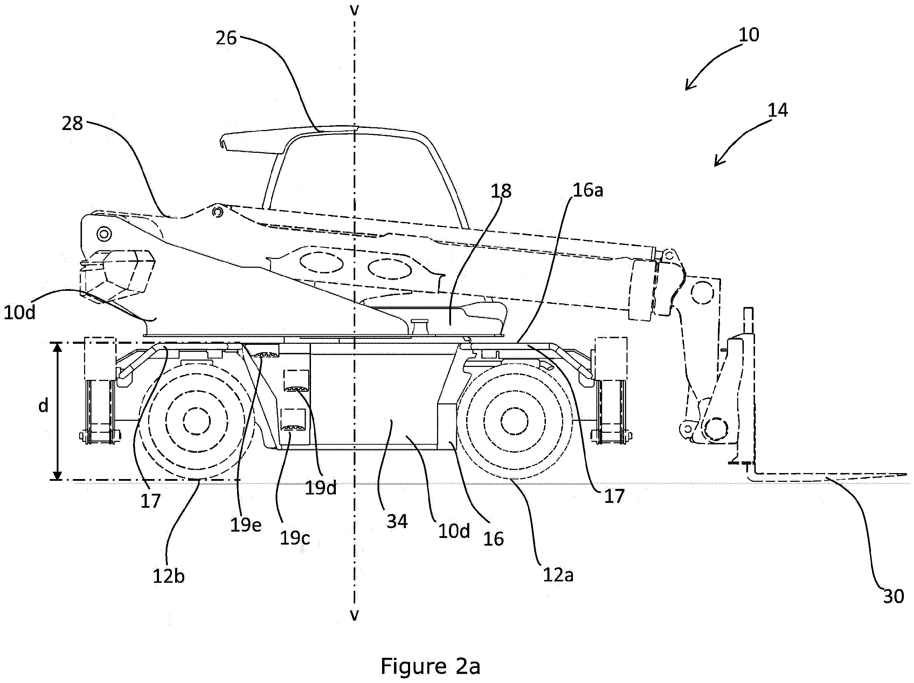

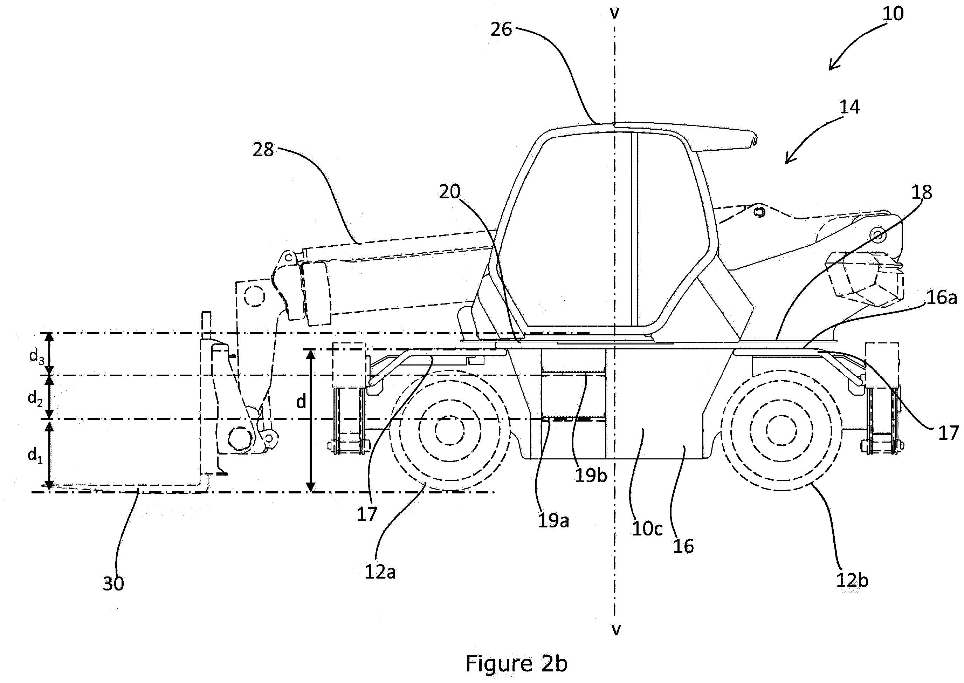

As illustrated in Figures 2a and 2b, a distance d is defined between the ground surface and the uppermost surface 16a of the undercarriage 16. The distance between the ground surface and the uppermost surface 16a is up to 1200mm, for example up to 1100mm. Distances in these ranges are less than typical rotary telehandlers, which typically provide distances of approximately 1340mm or greater. The reduction in the size of the wheels 12a, 12b along with the reduction in the height of the undercarriage 16 contribute to the reduction in the distance d between the ground surface and the uppermost surface 16a, and therefore to the overall compactness of the working machine 10.

The stabiliser arrangement 23a, 23b, illustrated in Figure 1, 3a and 3b, is pivotally mounted to the front and rear sides 10a, 10b of the working machine 10, on the undercarriage 16. The stabiliser arrangement 23a, 23b may be raised and lowered by actuators such as hydraulic cylinders to improve stability of the working machine 10 by lifting the adjacent wheels 12a, 12b off the ground during working operations. The stabiliser arrangement 23a, 23b includes front stabilisers 23a and a rear stabilisers 23b. The front and rear stabilisers 23a, 23b each include first and second stabiliser legs which are pivotable between a stowed position, illustrated in Figures 1, 3a and 3b, and a deployed position. During a lifting operation, by way of example, the stabiliser legs may be deployed to lift the front and rear wheels 12a, 12b off the ground surface. When deployed, the lifting capacity of the working machine may be increased as the point about which tipping moments are generated is closer to the load, reducing the tipping/overturning moment for a given load, and the restoring moment due to the mass of the working machine as a counterweight is increased.

In this embodiment, the at least one fender 17 is integral with the undercarriage 16, however it shall be appreciated that in alternative embodiments the at least one fender may be provided as a separate component to the undercarriage 16. The at least one fender 17 provides protection to the wheels 12a, 12b and other adjacent components by providing a guard from debris and other objects during operation of the working machine 10. Additionally, the at least one fender 17 improves cleanliness of the working machine 10 by guarding the superstructure 18 from debris and dirt.

The at least one fender 17 does not extend above the uppermost surface 16a of the undercarriage 16. Put another way, the entirety of the fender is located at or below the uppermost surface 16a of the undercarriage 16. The at least one fender 17 may form part of the uppermost surface 16a. The sizing of the wheels 12a, 12b, described above, enables this arrangement of the at least one fender 17 at or below the uppermost surface of the undercarriage 16. This is because the reduced wheel size provides the space for the at least one fender 17 to be fitted above the first and second pair of wheels 12a, 12b. The at least one fender 17 does not, therefore, increase the height of the superstructure 18 from the ground surface.

Additionally, providing the at least one fender 17 at or below the uppermost surface 16a of the undercarriage 16 helps to improve accessibility and safety of the working machine 10 by providing a planar and unobstructed uppermost surface 16a on which the operator may move around. In the embodiment of the Figures, four fenders 17 are provided, with each fender being associated with each of the four wheels 12a, 12b. There is therefore provided a front fender 17 on the cab side 10c, and front fender 17 on the lifting arm side 10d, a rear fender 17 on the cab side 10c, and a rear fender 17 on the lifting arm side 10d. It shall be appreciated that in alternative embodiments, fewer or more than four fenders 17 may be provided, or the at least one fender may be omitted, or may at least partially extend above the uppermost surface 16a of the undercarriage 16.

The access arrangement 19a-e of the undercarriage 16 is configured to permit operator access to the uppermost surface 16a of the undercarriage 16. The uppermost surface 16a of the undercarriage 16 may include or define an access surface, for example a platform or walkway, above which the operator cab 26 is configured to rotate. The access surface is accessible via the access arrangement 19a-e. In such embodiments, the at least one fender 17 may form part of the access surface, platform or walkway. In the embodiment of Figures 1a to 4c, the access arrangement 19a-d includes a first access arrangement 19a, 19b and a second access arrangement 19c-e. The first access arrangement 19a, 19b is located on the cab side 10c of the working machine 10, on the undercarriage 16. The second access arrangement 19c-e is located on the lift arm side 10d of the working machine 10, on the undercarriage 16.

As illustrated in Figures 1 and 2b, the first access arrangement 19a, 19b includes two steps 19a, 19b, a first lower step 19a and a second upper step 19b.

Providing two steps 19a, 19b (as opposed to more than two steps) helps to improve ease of ascension to the operator cab 26. This is because the provision of two steps improves stability and speed of ascension compared to a greater number of steps 19a, 19b. A width of each of the steps 19a, 19b may be relatively wide compared to the second access arrangement 19c-e. This helps to improve safety because wider steps 19a, 19b provide a larger surfaces for the operator to step on as well as improving ease of access. The width and number of steps 19a, 19b are particularly advantageous on the cab side 10c of the working machine 10, because this is the most commonly used access arrangement. In embodiments where the drive arrangement 22 is at least partially located on the lifting arm side 10d of the working machine 10, additional space is available between the front and rear wheels 12a and 12b on the cab side 10c compared to the lifting arm side 10d for increasing the width of the step 19a, 19b. Put another way, the steps 19a, 19b can take up space on the cab side 10c occupied by the drive arrangement 22 on the lifting arm side 10d. The first and/or second step 19a, 19b may be provided with an anti-slip feature, for example a tread.

The provision of two steps 19a, 19b located on the undercarriage 16 enables the working machine 10 to have a reduced height whilst meeting the requirements of EN1459-2 and ISO2867 regarding the minimum and maximum allowable distances between the ground surface and the first step 19a, and the first step 19a and the second step 19b. The maximum allowable distance between the ground surface and the first step 19a is 550mm. The maximum allowable distance between the first step 19a and the second step 19b, and the second step 19b and the cab floor is 350mm. The minimum allowable distance between the first step 19a and the second step 19b is 230mm, and the minimum allowable distance between the second step 19b and the uppermost surface 16a is 150mm. In order to be compliant with EN1459-2 and ISO2867, there is therefore a minimum allowable distance d and a maximum allowable distance d between the ground surface and the uppermost surface 16a of the undercarriage 16.

The distance d₁ between the first step 19a and the second step 19b is therefore up to 550mm, for example up to 545mm. The distance d₂ between the first step 19a and the second step 19b and the distance d₃ between the second step 19b and the cab floor is therefore up to 350mm, for example up to 346mm. These distances d₁, d₂, d₃ have therefore been selected such that the distance d between the ground surface and the uppermost surface 16a is a distance compliant with EN1459-2 and ISO2867 with two steps.

It shall be appreciated that the maximum and minimum step heights set by EN1459-2 and ISO2867 apply to the primary access arrangement, which is the first access arrangement 19a, 19b. The second access arrangement 19c-e, illustrated in Figure 2a, is of a different configuration to the first access arrangement 19a, 19b. The second access arrangement 19c-e includes first, second and third steps 19c-e. It shall be appreciated that in alternative embodiments, the first and second access arrangements 19a-e may include the same number of steps.

The steps 19c-e are narrow compared to the steps of the first access 19a, 19b, as described above. This creates additional space to house components of the drive arrangement 22, as will be described in more detail below. Additionally, as the second access arrangement 19c-e is used less frequently than the first access arrangement 19a, 19b, the narrower steps 19c-e cause less of an inconvenience to the operator.

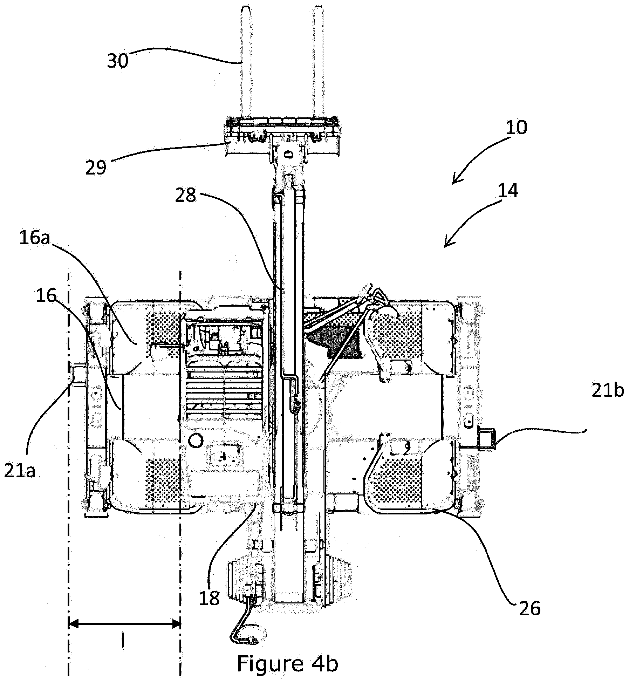

The auxiliary access arrangement 21a, 21b, illustrated in Figure 4b, is configured to permit operator access to the uppermost surface 16a of the undercarriage 16. In the embodiment of Figure 1 to 4c, the auxiliary access arrangement 21a, 21b includes a first auxiliary access arrangement 21a and a second auxiliary access arrangement 21b. The first auxiliary access arrangement 21a is located on the front side 10a of the working machine 10, on the undercarriage 16. The second auxiliary access arrangement 21b is located on the rear side 10b of the working machine 10, on the undercarriage 16. When the superstructure 18 is rotated 90° clockwise from the forward aligned position, as illustrated in Figure 4b, a distance l between the first access arrangement 21a and the closest sidewall of the operator cab 26 is up to 1400mm, for example up to 1200mm. When the superstructure 18 is rotated 90° anti-clockwise from the forward aligned position, a distance between the second access arrangement 21b and the closest sidewall of the operator cab 26 is up to 1400mm, for example up to 1200mm.

The first auxiliary access arrangement 21a includes three steps. The second auxiliary access arrangement 21b is of substantially the same configuration to the first auxiliary access arrangement 21a, i.e. including first, second and third steps. It shall be appreciated that in alternative embodiments, the first and second access arrangements 21a, 21b may be of different configurations, and may include two steps.

The provision of the access arrangement 19a-e and the auxiliary access arrangement 21a, 21b on each side of the working machine 10 improves access to the uppermost surface 16 as well as safety, because the operator can mount and dismount at a number of locations on the working machine 10. Additionally, the provision of the access arrangement 19a-e on the cab side 10c and the lift arm side 10d, and the provision of the auxiliary access arrangement 21a, 21b on the front side 10a and the rear side 10b helps to ensure the working machine 10 complies with EN1459-2 and ISO2867.

It shall be appreciated in alternative embodiments, the first access arrangement, the second access arrangement the first auxiliary access arrangement 21a and/or the second auxiliary access arrangement 21b may be omitted, or alternative access arrangements to steps may be provided, for example a portable ladder.

The operator cab 26, from which the operator can operate the working machine 10, is mounted to the superstructure 18. The operator cab 26 generally includes a floorplate which defines the underside of the operator cab 26, a roof which provides an uppermost surface of the working machine 10, an aft or rear wall, a front wall including a windscreen, a first side wall, and a second sidewall, as is known in the art. It shall be appreciated that any suitable embodiment of operator cab 26 may be used. The cab 26 includes an operator seat (not shown) and controls (not shown) for operating the working machine 10. The operator cab 26 is mounted to the superstructure 18 in a position offset from the centre of the superstructure 18 so as to be positioned proximate the cab side 10c.

A particular advantage of the working machine 10 according to the present teachings is a reduction of the height of the operator cab 26 from the ground surface. As described above, the reduction in the height of the operator cab 26 is provided by the reduction in the distance d. The distance between a lowermost surface of the operator cab 26 and the ground surface is up to 1250mm, in this embodiment up to 1235mm. This is considerably less than known compact rotary telehandlers, wherein the distance between the lowermost surface and the operator cab 26 is approximately 1540mm or greater.

A ratio of a height of the operator cab to the height of the undercarriage is greater than 1 :0.7, for example greater than 1:0.63. A ratio of a height of the operator cab to the height of the working machine is greater than 1:1.7, for example greater than 1:1.6. These ratios are greater than the ratios of traditional working machines 10 of this type. EN1459-2 and ISO2867 set out the minimum allowable height and width of the space within the operator cab 26. The working machine 10 therefore uses a standard operator cab 26 in order to comply with EN1459-2 and ISO2867. The cab height is approximately 1700mm. It is therefore the reduction in the distance d which enables a reduced overall height of the working machine 10, and the reduction in the distance between the operator cab 26 and the ground surface.

The drive arrangement 22 is provided for providing motive power to the ground engaging structure 12a, 12b. The drive arrangement 22 includes a prime mover 24 mounted to the undercarriage 16. The drive arrangement 22 may also include a transmission, an exhaust arrangement 32 including an aftertreatment system 33, mounted within a prime mover housing 34 interposed between the front and rear wheels 12a, 12b. An entirety of the drive arrangement 22 is positioned below a level coincident with a lower extent of the superstructure 18.

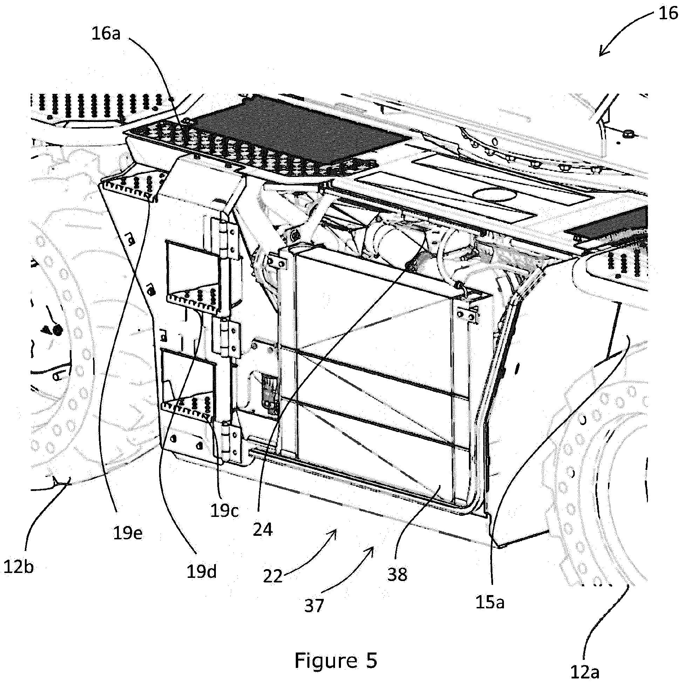

The prime mover 24 is mounted to the undercarriage 16 of the working machine 10 outboard of the main undercarriage structure. In the embodiment of Figures 5 to 6b, the prime mover 24 is mounted on the lift arm side 10d of the working machine 10. The prime mover 24 of this embodiment is an internal combustion engine 24 configured to run on gasoline or diesel. In alternative embodiments, the prime mover 24 may be a gas engine configured to run on a gaseous fuel such as hydrogen or compressed natural gas, amongst others. Alternatively, the prime mover 24 may be an electric motor, or may be a hybrid comprising both an internal combustion engine, an electric motor.

The prime mover 24 in this embodiment extends along an axis parallel to the longitudinal axis a-a of the working machine 10. That is to say, in this embodiment, a crankshaft (not visible) of the engine 24 extends along the axis parallel to the longitudinal axis a-a of the working machine 10 (i.e. in a direction running from the rear to the front of the working machine 10). The prime mover 24 is arranged substantially upright. The prime mover 24 includes a plurality of reciprocating pistons (four in this embodiment), and the pistons reciprocate about an axis substantially parallel to the main vertical axis v-v. This arrangement helps to reduce the width of the drive arrangement 22, because the prime mover 24 is orientated such that its smallest dimension extends widthways (i.e. in the direction extending between the cab side 10c and the lifting arm side 10d). Additionally, the height of the undercarriage 16 is not increased compared to alternative orientations of the prime mover 24 because a maximum dimension of the prime mover 24 is less than the distance d between the ground surface and the uppermost surface 16a of the undercarriage.

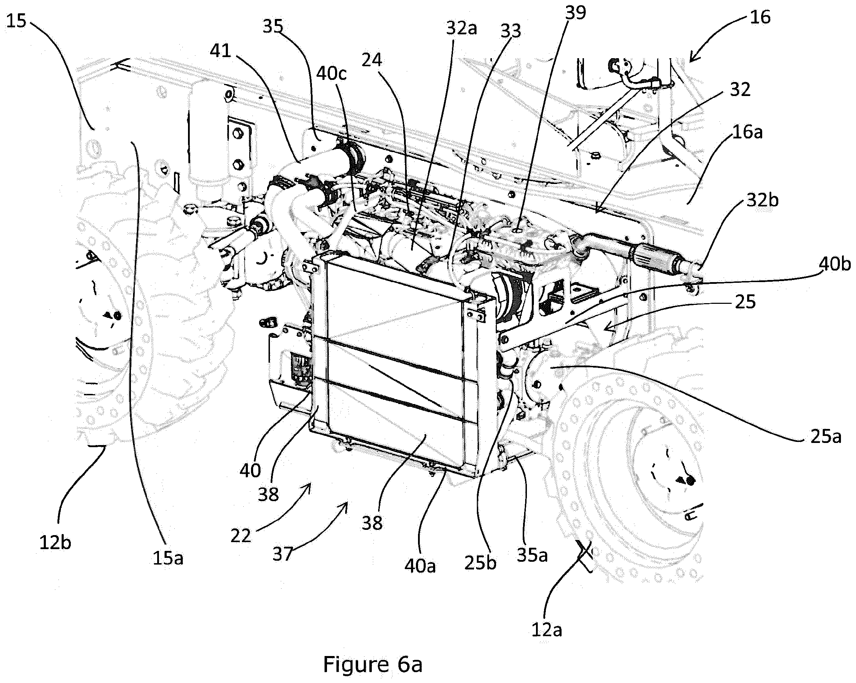

The transmission is mounted to the undercarriage 16 of the working machine 10. The transmission is a hydrostatic transmission in this embodiment. The hydraulic system includes a hydraulic pump arrangement 25, illustrated in Figure 6a, having a hydraulic pump 25a mounted forward of the prime mover 24 along axis a-a and at least one hydraulic motor. The hydraulic pump arrangement 25 in this embodiment includes the main hydraulic pump 25a and a transmission pump 25b. The hydraulic pump arrangement 25 is configured to be driven by the prime mover 24. The hydraulic pump arrangement 25 may be used to drive the at least one hydraulic motor of the hydrostatic transmission (via the transmission pump 25b) and drive hydraulic actuators and/or for operation of the lifting arm 28 (via the hydraulic pump 25a), for example by supplying hydraulic fluid through the swivel joint, or some other hydraulic service, for example the stabiliser arrangement 23a, 23b. It shall be appreciated that in alterative embodiment, any suitable hydraulic pump arrangement 25 may be provided.

It shall be appreciated that in alternative embodiments, other prime mover and transmission in various combinations may be possible.

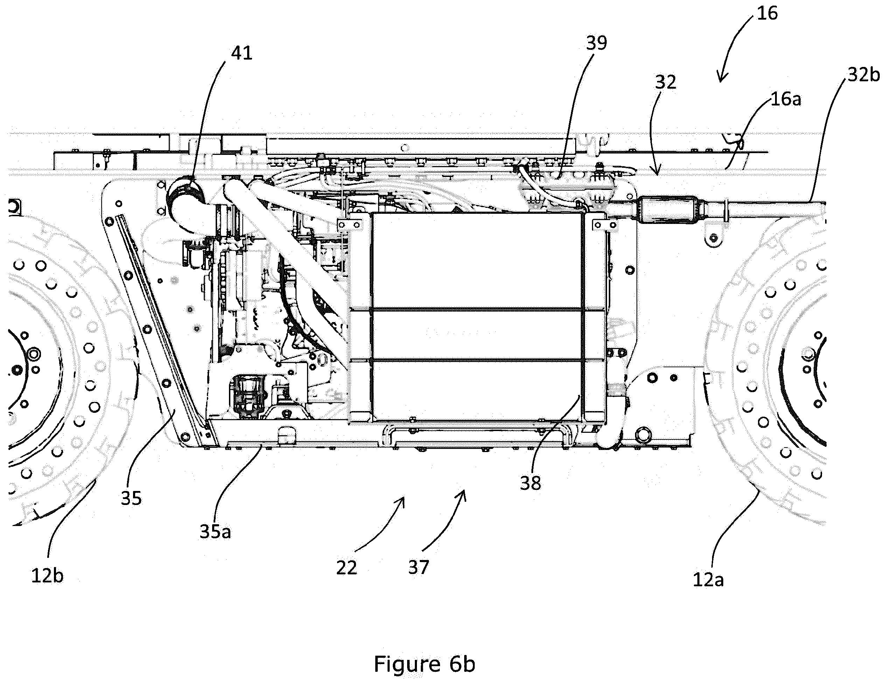

The prime mover housing 34, illustrated in a partially assembled state in Figures 6a and 6b, is configured to house the prime mover 24 and to mount the prime mover 24 and components of the aftertreatment system 33 to the undercarriage 16. The prime mover housing 34 may house additional components of the drive arrangement 22, for example at least part of the hydrostatic transmission, and/or at least part of the exhaust arrangement 32. The prime mover housing 34 is a subassembly removably mounted to the undercarriage 16. The prime mover housing 34 may include any combination of brackets, plates and/or fasteners configured to removably mount the prime mover housing 34 to the undercarriage 16.

In the embodiment of Figures 6a and 6b, the prime mover housing includes a cradle 35 which is mounted to the undercarriage, specifically to an outboard face of the vertical plate 15a of the frame 15. The cradle 35 includes a base plate 35a which extends from the undercarriage 16 in a direction away from the longitudinal axis a-a of the working machine 10. The base plate 35a is configured to support the prime mover 34 and additional components of the drive arrangement 22 thereon. To mount the prime mover housing 34 to the undercarriage 16, the prime mover 34 and additional components of the drive arrangement 32 are assembled with a portion of the prime mover housing 34. The entire subassembly is lifted onto the cradle 35 of the undercarriage 16 so as to be supported by the base plate 35a and to form the assembled prime mover housing 34. The exhaust arrangement 32 is configured to remove exhaust gases produced by the engine 24 during combustion. As illustrated in Figure 6a and 6b, the exhaust arrangement 32 does not extend beyond the uppermost surface 16a of the undercarriage 16.

The exhaust arrangement 32 includes an exhaust manifold 32a connected to an exhaust pipe 32b. The exhaust manifold 32a is attached to a cylinder head of the engine 24 and collects exhaust gases produced by the engine 24 during combustion and directs them into the exhaust pipe 32b via the aftertreatment system 33.

The aftertreatment system 33 is used to treat gases that are exhausted from the prime mover 24. For example, treatment may include reducing the amount of particulate matter and/or nitrous oxides that are to be exhausted from the prime mover 24 to the surrounding environment. The aftertreatment system 33 may include a selective catalytic reduction converter (SCR) with a diesel exhaust fluid (DEF) injector and/or a diesel particulate filter (DPF). It shall be appreciated that in alternative embodiments, any of the devices in the aftertreatment system 33 may be included and/or omitted. In some embodiments, the aftertreatment system 33 may include an ammonia slip catalyst and/or a diesel oxidation catalyst.

The exhaust pipe 32b carries the exhaust gases away from the engine 24. As illustrated in Figures 6a and 6b, the exhaust manifold 32a extends away from the engine 24. In this embodiment, the exhaust manifold 32a extends in a direction towards the front side 10a of the working machine 10. The exhaust pipe 32b also extends generally forwards. The exhaust pipe 32b extends below the front fender 17 on the lifting arm side 10d. It shall be appreciated that only a portion of the exhaust arrangement 32 may extend away from the engine 24. Furthermore, it shall be appreciated that the exhaust manifold may extend in a direction other than towards the front of the working machine 10, for example towards the ground surface.

The positioning of the exhaust arrangement 32 compared to traditional rotary telehandlers helps to reduce the overall height of the working machine 10 by reducing the height of the undercarriage 16. This is because the exhaust arrangement 32 does not extend out of the cylinder head of the engine 24 above the uppermost extent of the engine 24 and towards the cab side 10c of the working machine 10. This helps to reduce the overall height of the undercarriage, because the undercarriage does not need to accommodate the exhaust arrangement 32 above the uppermost extent of the engine 24 (i.e. increasing the overall height of the drive arrangement 22).

It shall be appreciated that the exhaust arrangement 32 may follow any suitable path, for example to avoid components of the working machine 10. The exhaust arrangement 22 may not therefore extend straight towards the front side 10a of the working machine 10. However, in order to reduce the height of the undercarriage 16, the exhaust arrangement 22 of this embodiment does not extend from the lift arm side 10d over the centreline a-a of the working machine 10.

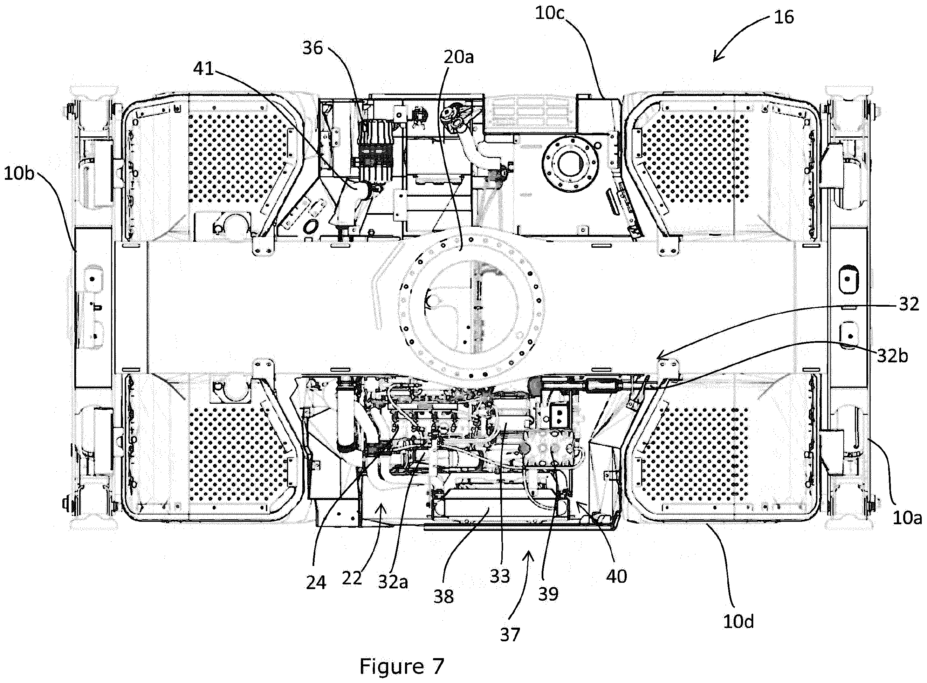

The air filter 36 is configured to supply filtered air to the engine air intake passage 41, as illustrated in Figure 7. The air filter 36 is located on an opposing side of the longitudinal axis a-a to the engine 24. The air intake passage 41 has its upstream end on an opposing side of the longitudinal axis a-a to the engine 24. This helps to keep the total width of the undercarriage 16 within the outermost width of the wheels 12a, 12b by providing some of the components of the drive arrangement 22 on the cab side 10c of the working machine 10. As the engine air intake passage 41 does not need to pass over the uppermost extent of the cooling arrangement 37 (as illustrated in Figure 6b), having the air filter 36 and the engine 24 on opposing sides of the longitudinal axis a-a does not unnecessarily increase the height of the undercarriage 16. Additionally, the air filter 36 may be easier to access for maintenance compared to if the air filter 36 was located on the lifting arm side 10d with the majority of the drive arrangement 22.

It shall be appreciated that in alternative embodiments, the air filter 36 and/or the air intake 41 may be located on the same side of the longitudinal axis a-a.

The cooling arrangement 37, illustrated in Figures 5a to 7, is configured to cool the prime mover 24. The cooling arrangement 37 includes a radiator panel 38, and may include a header reservoir 39. The radiator panel 38 forms part of a cooling pack. The radiator panel 38 may include a plurality of tubes and fins (not shown), and coolant flows through tubes in the radiator 38 whilst air passes over the fins, transferring heat from the coolant to the surrounding air, as is known in the art. The cooling pack may also include a cooling fan (not shown), often electrically or hydraulically driven, mounted to the radiator panel 38. The cooling fan helps to draw air through the radiator 38 to improve the efficiency of the cooling process. The radiator panel 38 includes a substantially rectangular body that is significantly thinner in the direction air passes than its width and height. It shall be appreciated that in alternative embodiments, any suitable shape of radiator panel 38 may be provided.

The radiator panel 38 is at least partially arranged below an uppermost extent of the prime mover 24, as illustrated in Figure 6b. A majority of the radiator panel 38 is arranged below an uppermost extend of the prime mover 24. In this embodiment, an entirety of the radiator panel 38 is arranged below an uppermost extent of the prime mover 24. Advantageously, the positioning of a portion, a majority or an entirety of the radiator panel 38 below an uppermost extend of the prime mover 24 enables the working machine to have a reduced height. This is compared to, for example, a working machine wherein the radiator panel 38 is mounted above the prime mover 24 as such an arrangement increases the overall height of the drive arrangement 22 and cooling arrangement 37, thereby increasing the height of the undercarriage 16.

The prime mover 24 and hydraulic pump is at least partially interposed between the radiator panel 38 and the undercarriage 24. A majority of the prime mover 24 and hydraulic pump is interposed between the radiator panel 38 and the undercarriage 16 in direction t-t. The position of the prime mover 24 and optionally the hydraulic pump between the radiator panel 38 and the undercarriage 16 helps to reduce the overall height of the undercarriage 16 compared to traditional rotary telehandlers, where the radiator panel 38 is mounted at least partially above the upper extent of the prime mover 38, thereby increasing the height of the prime mover housing 34 and therefore the undercarriage 16. The prime mover housing 34 defines a frontmost surface with respect to the direction of travel of the working machine 10. The prime mover housing 34 defines an outermost side located further away from the central longitudinal axis a-a of the working machine 10. The radiator panel 38 does not extend beyond the frontmost surface of the prime mover housing 34. The radiator panel 38 is located outward of the prime mover 24 with respect to the longitudinal axis a-a. The radiator panel 38 is located on the outermost side of the prime mover housing 34. The radiator panel 38 is substantially planar, and the planar radiator panel 38 extends parallel to the longitudinal axis a-a. The provision of the radiator panel 38 on the outermost side of the prime mover housing 34, as opposed to above the prime mover 24 or in front of the prime mover, helps to reduce the overall height and length of the undercarriage 16.

The radiator panel 38 is interposed between the front and rear wheels 12a, 12b on a side of the working machine 10. The radiator panel 38 does not extend transversely beyond the front and rear wheels 12a, 12b when the wheels are in a non-steered condition as depicted. This helps to utilise the space between the front and rear wheels 12a, 12b, without increasing the width of the working machine 10 (i.e. by extending beyond the wheels 12a, 12b in a width direction).

The prime mover 24 is interposed between the second access arrangement 19c-e and the undercarriage 16. As described above, the narrower steps 19c-e of the second access arrangement 19c-e help to create space to house the prime mover 24 and additional components of the drive arrangement 22. The radiator panel 38 is located closer to the frontmost side of the prime mover 24 than a rearmost side of the prime mover 24. This helps to prevent the radiator panel 38 from obstructing the second access arrangement 19c-e. The radiator panel 38 is located adjacent the second access arrangement 19c-e, as illustrated in Figure 5. The radiator panel 38 may be located forward of the second access arrangement 19c-e. The position of the radiator panel 38 adjacent the second access arrangement 19c-e helps to decrease the height of the undercarriage 16 without increasing the width of the undercarriage 16 by utilising the width already taken up by the second access arrangement 19c-d.

The cooling arrangement 37 is mounted to the prime mover 34 housing via a mounting arrangement 40, as illustrated in Figure 6a and 6b. The mounting arrangement 40 is mounted to the prime mover housing 34 prior to the prime mover housing 34 being assembled onto the working machine 10. As such, the cooling arrangement 37 along with the prime mover 34 are mounted to the working machine 10 as a subassembly.

The mounting arrangement 40 may include a plurality of mounting brackets, plates and fasteners. As illustrated in the embodiment of Figure 6a, the mounting arrangement 40 is supported on the base plate 35a of the cradle 35. The mounting arrangement 40 includes a frame 40a conforming to the shape of the radiator panel 38. In the embodiment of Figures 6a and 6b, the frame 40a is therefore substantially U-shaped and extends around the lowermost and side surfaces of the radiator panel 38. The frame 40a is mounted to the radiator panel 38 using fasteners.

The mounting arrangement 40 includes a first bracket 40b extending between the cradle 35 of the prime mover housing 34 and the frame 40a. The first bracket 40b is connected to the side surface of the frame 40a. The mounting arrangement 40 includes a second bracket 40c extending between the cradle 35 of the prime mover housing 34 and a side surface of the frame 40a opposing the side to which the first bracket 40b is mounted. The second bracket 40c extends over the prime mover 24. The first and second brackets 40b, 40c of the mounting arrangement 40 help to mount the cooling arrangement 37 to the prime mover housing 34 and to the undercarriage 16, thereby reducing rocking of the radiator panel 38 during operation of the working machine 10.

It shall be appreciated that the mounting arrangement 40 described above is one of many possible embodiments of mounting arrangement 40 which may be used to mount the radiator panel 38 to the prime mover housing 34.

The header reservoir 39 provides a source of coolant for the cooling arrangement 37. The header reservoir 39 helps to maintain balanced flow rates and pressure levels throughout the cooling arrangement 37. The header reservoir 39 may include any suitable valve or sensor assembly to regulate the distribution of coolant to the cooling arrangement 37. The header reservoir 39 is the uppermost component of the cooling arrangement 37. The header reservoir 39 may be located above the engine 24. In some embodiments, an uppermost surface of the header reservoir 39 may be level with the uppermost surface the engine 24, or below the uppermost surface of the engine 24.

Although the teachings have been described above with reference to one or more preferred embodiments, it will be appreciated that various changes or modifications may be made without departing from the scope as defined in the appended claims.

## Claims

1. A working machine comprising a front and rear defined by the principal direction of travel, and a cab side and a lifting arm side on either side of a longitudinal axis of the working machine, the working machine comprising:
a ground engaging structure comprising front and rear wheels;
a body comprising an undercarriage supported on the ground engaging structure and a superstructure rotatably mounted to the undercarriage;
a drive arrangement comprising a prime mover mounted to the undercarriage and operable to provide motive power to the ground engaging structure;
an operator cab mounted to the superstructure in a position offset from the longitudinal axis of the working machine so as to be positioned proximate to the cab side;
a lifting arm extending generally fore-aft for performing work functions and pivotable about a first generally horizontal axis; and
a cooling arrangement configured to cool the prime mover, said cooling arrangement comprising a radiator panel,
wherein the radiator panel is arranged outboard of the prime mover with respect to the longitudinal axis of the working machine.

2. The working machine according to claim 1, wherein a longitudinal axis of the prime mover extends along an axis substantially parallel to the central longitudinal axis of the working machine.

3. The working machine according to claim 2, wherein the undercarriage comprises a structural frame extending parallel to the longitudinal axis and the prime mover is mounted outboard of the structural frame.

4. The working machine according to any preceding claim, wherein the prime mover is at least partially interposed between the radiator panel and the undercarriage, optionally wherein a majority of the prime mover is interposed between the radiator panel and the undercarriage.

5. The working machine according to any preceding claim, wherein the radiator panel is interposed between front and rear wheels, optionally wherein the radiator panel does not extend beyond the front and rear wheels.

6. The working machine according to any preceding claim, radiator panel forms part of a cooling pack, optionally wherein the cooling pack comprises a cooling fan mounted to the radiator panel.

7. The working machine according to any preceding claim, wherein a ratio of a height of the operator cab to a height of the undercarriage is greater than 1:0.7, for example greater than 1:0.63 and/or wherein a ratio of a height of the operator cab to a height of the working machine is greater than 1:1.7, for example greater than 1:1.6.

8. The working machine according to any preceding claim, wherein a distance between an uppermost surface of the undercarriage and a ground surface is up to 1200mm, for example up to 1100mm and/or wherein a distance between a ground surface and a lowermost surface of the operator cab is up to 1250mm, for example up to 1235mm.

9. The working machine according to any preceding claim, wherein the undercarriage comprises an access arrangement located on the cab side and/or lifting arm side of the working machine configured to enable an operator to access an uppermost surface of the undercarriage from a ground surface, optionally wherein the radiator panel is located adjacent the access arrangement, for example forward of the access arrangement.

10. The working machine according to claim 9, wherein the undercarriage comprises a first access arrangement, and wherein the first access arrangement comprises no more than two steps, a first lower step and a second upper step, optionally wherein a distance between the first step and a ground surface is up to 550mm, optionally wherein a distance between the first step and the second step is up to 350mm.

11. The working machine according to any preceding claim, wherein the undercarriage comprises an auxiliary access step arrangement located on front and/or rear sides of the undercarriage.

12. The working machine according to claim 11, wherein a first auxiliary access step arrangement is located on the front side of the undercarriage, and wherein a distance between the first auxiliary access step arrangement and a closest sidewall of the operator cab is up to 1400mm, for example up to 1200mm when the superstructure is rotated 90° clockwise from a forward aligned or roading position and/or wherein a second auxiliary access step arrangement is located on the rear side of the undercarriage, and wherein a distance between the second auxiliary access step arrangement and a closest sidewall of the operator cab is up to 1400mm, for example up to 1200mm when the operator cab is rotated 90° anti-clockwise from a forward aligned or roading position.

13. The working machine according to any preceding claim, wherein the drive arrangement further comprises an exhaust arrangement.

14. The working machine according to claim 13, wherein the exhaust arrangement does not extend beyond the uppermost surface of the undercarriage.

15. The machine according to any preceding claim, wherein the undercarriage comprises at least one fender located above at least one of the wheels, wherein an entirety of the fender is located at or below the uppermost surface of the undercarriage, optionally wherein the undercarriage defines an uppermost surface, and wherein the at least one fender forms part of the uppermost surface.
